# EUROPEAN PATENT APPLICATION

(11) **EP 3 104 442 A1**
(43) Date of publication of application: **14.12.2016**
(21) Application number: 15743164.4
(22) Date of filing: 03.02.2015
(51) Int. Cl.: H01M 8/06, H01M 8/04, H01M 8/12, H01M 8/24, C01B 3/38

(54) **SOLID OXIDE FUEL CELL SYSTEM**

(30) Priority: 03.02.2014 JP 2014018712
(71) Applicant: Toto Ltd., Kitakyushu, Fukuoka 802-8601 (JP)
(72) Inventor: WATANABE Naoki, Kitakyushu-shi Fukuoka 802-8601 (JP); ISAKA Nobuo, Kitakyushu-shi Fukuoka 802-8601 (JP); SATO Masaki, Kitakyushu-shi Fukuoka 802-8601 (JP); TANAKA Shuhei, Kitakyushu-shi Fukuoka 802-8601 (JP); ANDO Shigeru, Kitakyushu-shi Fukuoka 802-8601 (JP); OKAMOTO Osamu, Kitakyushu-shi Fukuoka 802-8601 (JP); KAKINUMA Yasuo, Kitakyushu-shi Fukuoka 802-8601 (JP); HAYAMA Kiyoshi, Kitakyushu-shi Fukuoka 802-8601 (JP); FURUYA Seiki, Kitakyushu-shi Fukuoka 802-8601 (JP); MOMIYAMA Yutaka, Kitakyushu-shi Fukuoka 802-8601 (JP)
(74) Representative: Witte, Weller & Partner Patentanwälte mbB
(86) International application number: PCT/JP2015/052975
(87) International publication number: WO 2015/115662

(57) **Abstract**

The solid oxide fuel cell apparatus of the present invention comprises: multiple fuel cells 16 mutually electrically connected to each other; an outside cylindrical member 66 for housing the multiple fuel cells 16; an oxidant gas supply flow path 22 for supplying oxidant gas to the fuel cells 16; a fuel gas supply flow path 20 for supplying fuel gas to the fuel cells 16; a reforming portion 94 for producing fuel gas by reforming raw fuel gas using steam; an evaporating portion 86 for producing steam supplied to the reforming portion 94; and a fuel gas supply pipe 90 for supplying water evaporated by the evaporating portion 86; wherein the evaporating portion 86 comprises a sloped plate 86a for dispersing water supplied from the fuel gas supply pipe 90 over the entire evaporating portion 86 using capillary action.

## Description

### TECHNICAL FIELD

The present invention pertains to a solid oxide fuel cell apparatus, and more particularly to a solid oxide fuel cell apparatus comprising an evaporator.

### BACKGROUND ART

Solid oxide fuel cells ("SOFCs" below) are fuel cells which operate at a relatively high temperature in which, using an oxide ion-conducting solid electrolyte as electrolyte, with electrodes attached to both sides thereof, fuel gas is supplied to one side thereof and oxidizer gas (air, oxygen, or the like) is supplied to the other side thereof.

Conventionally, in solid oxide fuel cells water is supplied to an evaporator and steam produced by vaporizing that water in the evaporator, then a mixed gas of steam and raw fuel gas is reformed and a fuel gas (hydrogen gas) extracted. Patent Reference-1 pertains to such a solid oxide fuel cell, and discloses a fuel cell which uses an evaporator formed of a horizontal flat plate.

### PRIOR ART REFERENCE

### PATENT REFERENCE

Patent Reference-1: Japanese Patent Application Laid-open under No. 2013-171740

### SUMMARY OF THE INVENTION

### PROBLEM TO BE SOLVED BY THE INVENTION

In a solid oxide fuel cell, steam is produced by vaporizing an extremely small amount of water in an evaporator, and a mixed gas of that steam together with raw fuel gas is reformed in a reformer to produce fuel gas. In this case, managing the S/C ratio, which is the stoichiometric ratio of steam and the total quantity of carbon in carbon monoxide contained in the raw fuel gas, is important for stabilizing reforming in the reformer, so it is desirable to reliably disperse these tiny quantities of water. On the other hand, if water accumulates in a partial area on the reformer, there is a potential that bumping in the evaporator will cause degradation of the fuel cells in conjunction with fuel depletion. From the standpoint of preventing such problems, as well, it is important to uniformly disperse water in the evaporator.

In the technology set forth in Patent Document 1 above, measures were taken to extend vaporization time using a winding flow path and the like, but this was not sufficient to assure the dispersion of tiny amounts of water.

Therefore the present invention has the object of providing a solid oxide fuel cell apparatus with which tiny amounts of water can be appropriately dispersed over the entirety of an evaporator.

### MEANS FOR SOLVING THE PROBLEM

To accomplish the above object, the present invention is a solid oxide fuel cell apparatus for generating electricity by supplying fuel gas and oxidant gas and causing a reaction, includes: multiple fuel cells mutually electrically connected to each other, a housing case for housing multiple fuel cells, an oxidant gas supply passage for supplying oxidant gas to multiple fuel cells, a fuel gas supply passage for supplying fuel gas to multiple fuel cells, a reformer, disposed inside the fuel gas supply passage, for reforming raw fuel gas using steam to produce fuel gas, an evaporator for producing steam supplied to the reformer, and a water supply portion for supplying water to be vaporized in the evaporator; wherein the evaporator comprises a capillary-action producing portion for dispersing water supplied from the water supply portion over the entire evaporator using capillary action.

In the invention thus constituted, the evaporator comprises a capillary-action producing portion for dispersing water supplied from the water supply portion over the entire evaporator using capillary action, therefore tiny amounts of water from the water supply portion can be appropriately dispersed over the entire evaporator. Specifically, by adopting a simple constitution to take advantage of the capillary action, tiny amounts of water from the water supply portion can be immediately spread throughout the evaporator before being evaporated (vaporized) in the evaporator. As a result, said water vaporizes in locations to which it has spread in the evaporator, and is mixed with raw fuel gas, so a stable, uniform mixed gas can be produced. This enables the S/C ratio to be appropriately managed. Bumping in the evaporator can be prevented, as water is not continuously accumulating on a partial area of the evaporator. Thus fuel cell degradation and the like caused by fuel depletion can be prevented.

In the present invention, preferably, the evaporator capillary-action producing portion of the evaporator is formed by an acute-angle shaped indentation (recess) disposed over the entire bottom surface of the evaporator.

In the invention thus constituted, the evaporator capillary-action producing portion is formed by an acute-angle shaped indentation disposed over the entire bottom surface of the evaporator, therefore the capillary action can be achieved with a simple constitution.

The present invention preferably further includes a mixing chamber positioned above the evaporator, for mixing steam and raw fuel gas supplied from below, and the evaporator supplies steam and raw fuel gas to the mixing chamber from a position opposed to a position at which water and raw fuel gas are supplied, across a center axis of the evaporator.

In the invention thus constituted, steam produced from water appropriately dispersed in the evaporator by capillary action is mixed with raw fuel gas in the mixing chamber positioned above the evaporator, therefore the mixing characteristics of steam and raw fuel gas in the mixing chamber can be improved. Additionally, in the present invention, the mixing chamber is not disposed horizontally with the evaporator; rather it is disposed in the upper direction of the evaporator, and the location in the evaporator where water and raw fuel gas are supplied and the location where gas is supplied from the evaporator to the mixing chamber (i.e., the gas outlet in the evaporator) are positioned on opposite sides, sandwiching the center axis of the evaporator. Steam and raw fuel gas are therefore mixed relatively slowly inside the evaporator, so the mixing quality between steam and raw fuel gas can be raised inside the evaporator as well. Therefore, the present invention enables the mixing quality between steam and raw fuel gas to be greatly improved by use of both the evaporator and the mixing chamber.

In the present invention, preferably, the evaporator includes a sloped plate, one end of which is affixed to a vertically extending inside wall of the housing case, and which slopes upward from the said end toward the other end, and, in the capillary-action producing portion, the acute-angle shaped indentation is configured by the gap formed by the sloped plate and the inside wall of the housing case.

In the invention thus constituted, the acute angle-shaped indentation is formed using the inside wall of the housing case, by placing the upward-sloping sloped plate on that inside wall, therefore the capillary-action producing portion can be implemented using a simple constitution.

In the present invention, preferably, the housing case is configured to form a circular or elliptical ring-shaped inside space, and the sloped plate is formed in a circular or elliptical ring shape and is disposed over the entire inside circumferential surface of the inside space.

In the housing case configured to form the circular or elliptical internal space, the volume of the evaporator is large relative to the tiny amount of water, hence water dispersion tends to be difficult. In the present invention, stable dispersion characteristics with the tiny amount of water can be secured by applying the circular or elliptical sloped plate disposed over the entirety of the inside circumferential surface of the internal space in the housing case. Specifically, when using an evaporator constituted by the circular or eliptical sloped plate as in the present invention, water can be more effectively dispersed compared to using an evaporator shaped in a squared ring (e.g., a rectangular ring) rather than in the circular or elliptical ring shape, since tiny amounts of water quickly reach the entire evaporator.

The present invention preferably further comprises a circular or elliptical heater disposed on the outer circumferential surface of the housing case, and on the entire perimeter of a position corresponding to the evaporator.

In the invention thus constituted, the entire perimeter of the evaporator is heated by a heater, therefore steam can be uniformly produced by the entire evaporator. By heating the evaporator with a heater, the steam required for reforming in the reformer can be appropriately produced in the evaporator even when starting up the solid oxide fuel cell apparatus from a low temperature.

In the present invention, preferably, the heater is disposed above the capillary-action producing portion.

In the invention thus constituted, because a position on the outside circumferential surface of the housing case corresponding to the sloped plate is not heated directly, tiny amounts of water can be prevented from vaporizing while they are dispersing over the sloped plate. Steam can therefore be appropriately produced in the entire evaporator.

### EFFECT OF THE INVENTION

The solid oxide fuel cell apparatus of the present invention enables tiny amounts of water to be appropriately dispersed over an entire evaporator, and enables the prevention of bumping in the evaporator.

### BRIEF DESCRIPTION OF THE DRAWINGS

Fig. 1 is an overview diagram showing a solid oxide fuel cell apparatus (SOFC) according to an embodiment of the present invention.
Fig. 2 is a cross section of an individual fuel cell housing case built into a solid oxide fuel cell apparatus according to an embodiment of the present invention.
Fig. 3 is a cross section showing an exploded view of the main members of an individual fuel cell housing case built into a solid oxide fuel cell apparatus according to an embodiment of the present invention.
Fig. 4 is a cross section showing an expanded view of the exhaust collector chamber part built into a solid oxide fuel cell apparatus according to an embodiment of the present invention.
Fig. 5 is a cross section through V-V in Fig. 2.
Fig. 6 (a) is a cross section showing an expanded view of the bottom end portion of individual fuel cells on which the bottom end is used as a cathode, and Fig. 6 (b) is a cross section showing an expanded view of the bottom end portion of individual fuel cells on which the bottom end is used as an anode.
Fig. 7 is a diagram explaining the effect of an evaporator according to an embodiment of the invention.
Fig. 8 is a perspective view explaining specific constitution of a mixing plate according to an embodiment of the invention.
Fig. 9 is a plan view of a dispersion plate according to an embodiment of the invention.
Fig. 10 is a diagram explaining the effect of a mixing plate and dispersion plate, etc. according to an embodiment of the invention.
Fig. 11 is a plan view of a dispersion plate according to a variant example of the invention.
Fig. 12 is a plan view of a dispersion plate according to an embodiment of the invention.
Fig. 13 is a cross section of a reformer according to an embodiment of the invention.

### MODE TO EXERCISE THE INVENTION

Next, referring to the attached drawings, we discuss a solid oxide fuel cell apparatus (SOFC) according to an embodiment of the present invention.

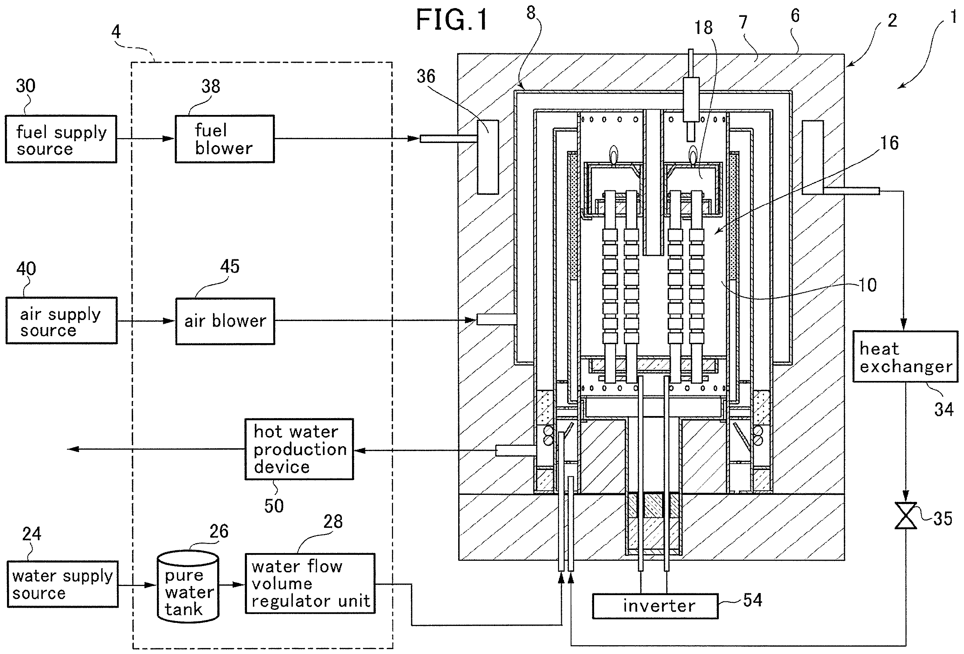

Fig. 1 is an overview diagram showing a solid oxide fuel cell apparatus (SOFC) according to an embodiment of the present invention. As shown in Fig. 1, the solid oxide fuel cell apparatus (SOFC) of this embodiment of the present invention comprises a fuel cell module 2 and an auxiliary unit 4.

The fuel cell module 2 comprises a housing 6; a fuel cell housing case 8 is disposed within this housing 6, mediated by the heat storage material 7. A generating chamber 10 is constituted on the interior of this fuel cell housing case 8; multiple individual fuel cells 16 are concentrically disposed within this generating chamber 10, and the generating reaction between fuel gas and air, which is the oxidizing gas, is carried out by these individual fuel cells 16.

An exhaust collection chamber 18 is attached to the top end portion of each of the individual fuel cells 16. Residual fuel (off-gas), unused for the generating reaction and remaining in each fuel cell 16, is collected in the exhaust collection chamber 18 attached to the top end portion and flows out of the multiple jet ports placed in the ceiling surface of the exhaust collection chamber 18. Outflowing fuel is combusted in the generating chamber 10 using remaining air not used for generation, producing exhaust gas.

Next, an auxiliary unit 4 is furnished with a pure water tank 26 for holding water from a municipal or other water supply source 24 and filtering it into pure water, and a water flow volume regulator unit 28 (a "water pump" or the like driven by a motor) for regulating the flow volume of water supplied from this pure tank. Also, the auxiliary unit 4 comprises a fuel blower 38 (a motor-driven "fuel pump" or the like), being a fuel supply apparatus, for regulating the flow volume of hydrocarbon raw fuel gas supplied from the fuel supply source 30, such as municipal gas.

Note that raw fuel gas which has passed through the fuel flow regulator unit 38 is directed into the fuel cell housing case 8 through to a desulfurizer 32, a heat exchanger 34 and an electromagnetic valve 35 disposed within the fuel cell module 2. The desulfurizer 36 is disposed in a circular ring shape around the fuel cell housing case 8, and operates to remove sulfur from raw fuel gas. The heat exchanger 34 is provided to prevent the inflow of high temperature raw fuel gas, the temperature of which has risen in the desulfurizer 32, from flowing directly into and degrading the electromagnetic valve 35. The electromagnetic valve 35 is provided to stop the supply of raw fuel gas into the fuel cell housing case 8.

The auxiliary unit 4 is furnished with an air flow regulator unit 45, which is an oxidant gas supply apparatus for regulating the flow volume of air supplied from the air supply source 40.

In addition, the auxiliary unit 4 is furnished with a hot water production device 50 for recovering exhaust gas heat from the fuel cell module 2. Tap water is supplied to this hot water production device 50; this tap water is heated by exhaust gas and supplied to a hot water tank in an external hot water device, not shown.

Also, an inverter 54, being an electrical power extracting portion (electrical power conversion portion) for supplying power generated by the fuel cell module 2 to the outside, is connected to the fuel cell module 2.

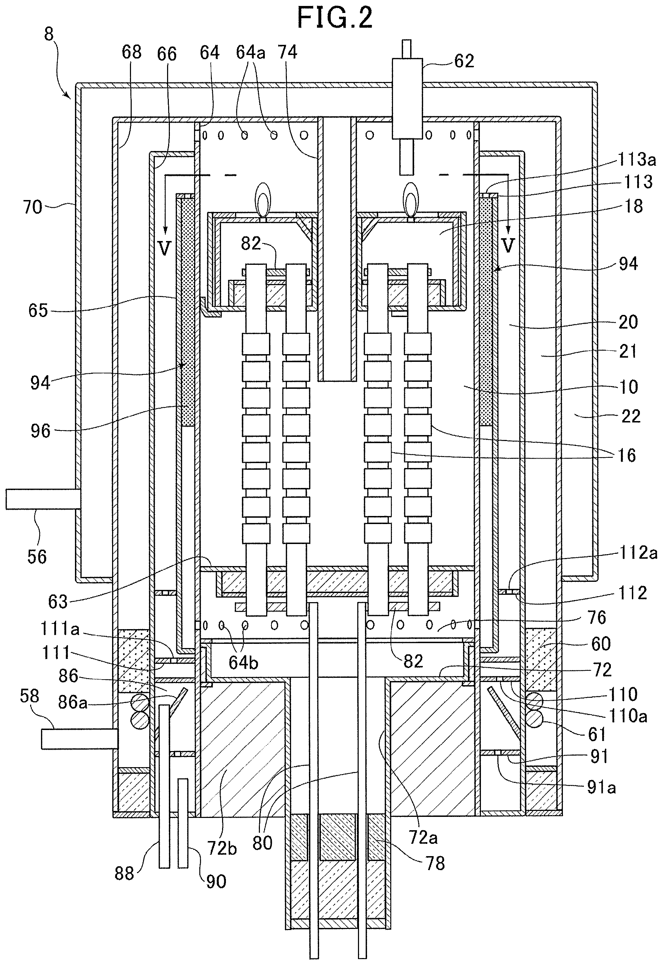

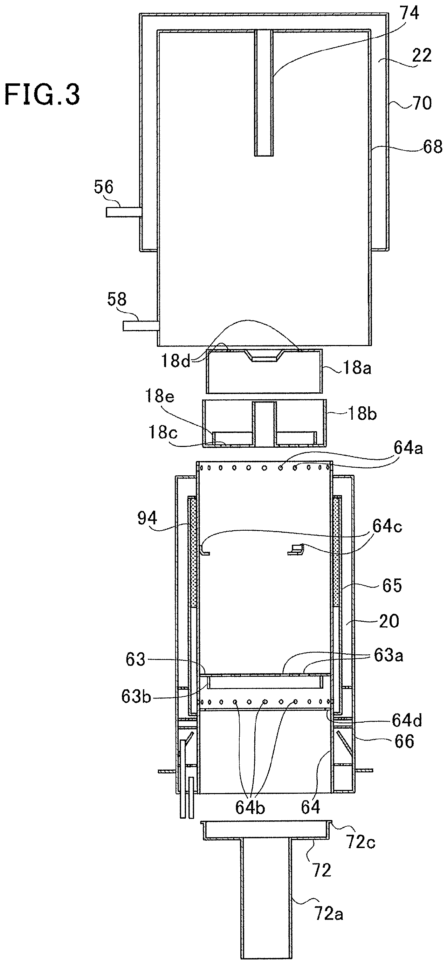

Next, referring to Figs. 2 and 3, we discuss the internal structure of the fuel cell housing case built into the fuel cell module of a solid oxide fuel cell apparatus (SOFC) according to an embodiment of the present invention. Fig. 2 is a cross-section of a fuel cell housing case; Fig. 3 is a cross-section showing exploded view of main members of a fuel cell housing case.

As shown in Fig. 2, multiple individual fuel cells 16 are concentrically disposed in the space inside the fuel cell housing case 8, and a fuel gas supply flow path 20 serving as fuel flow path, an exhaust gas discharge flow path 21, and an oxidant gas supply flow path 22 are concentrically formed in sequence so as to surround the multiple individual fuel cells 16. Here, exhaust gas discharge flow path 21 and oxidant gas supply flow path 22 function as an oxidant gas flow path for supplying/discharging oxidant gas.

First, as shown in Fig. 2, fuel cell housing case 8 is an approximately cylindrical sealed vessel; connected to its side surface are an oxidant gas introducing pipe 56, which is an oxidant gas inflow port for supplying generating air, and an exhaust gas exhaust pipe 58, which discharges exhaust gas. In addition, an ignition heater 62 for igniting residual fuel flowing out from the exhaust collection chamber 18 projects out from the top end surface of the fuel cell housing case 8.

As shown in Figs. 2 and 3, an inside cylindrical member 64, an outside cylindrical member 66, an inside cylindrical vessel 68, and an outside cylindrical vessel 70 are disposed in sequence from inside to outside so as to surround the perimeter of the individual fuel cells 16 on the inside of the fuel cell housing case 8. The above-described fuel gas supply flow path 20, exhaust gas discharge flow path 21, and oxidant gas supply fuel path 22 are flow paths respectively constituted between these cylindrical members and cylindrical vessels, and heat is exchanged between adjacent flow paths.

In other words, the exhaust gas discharge flow path 21 is disposed to surround fuel gas supply flow path 20, and oxidant gas supply fuel path 22 is disposed to surround exhaust gas discharge flow path 21. The open space at the bottom end of the fuel cell housing case 8 is blocked off by an approximately circular dispersion chamber bottom member 72, which forms the bottom surface of the fuel gas dispersion chamber 76 for dispersing fuel into each fuel cell 16.

The inside cylindrical member 64 is an approximately cylindrical hollow body, the top and bottom ends of which are open. A first affixing member 63, being a dispersion chamber-forming plate, is welded in an airtight manner to the interior wall surface of the inside cylindrical member 64. A fuel gas dispersion chamber 76 is demarcated by the bottom surface of this first affixing member 63, the inside wall surface of the inside cylindrical member 64, and the top surface of the dispersion chamber bottom member 72. Multiple insertion holes 63a, into which individual fuel cells 16 are inserted, are formed on the first affixing member 63, and each fuel cell 16 is adhered to the first affixing member 63 by ceramic adhesive, with the individual fuel cells 16 inserted into each of the insertion holes 63a. Thus in a solid oxide fuel cell apparatus 1 of the embodiment, ceramic adhesive is filled into the mutual joining portions between members constituting the fuel cell module 2, and each of the members is mutually joined in an airtight manner upon hardening.

The outside cylinder member 66 is a cylindrical pipe disposed around the inside cylinder member 64, formed to have an approximately similar shape to the inside cylinder member 64 so that an essentially fixed width annular flow path is formed between it and the inside cylinder member 64. In addition, an intermediate cylindrical member 65 is disposed between the inside cylindrical member 64 and the external cylindrical member 66. The intermediate cylindrical member 65 is a cylindrical pipe disposed between the inside cylindrical member 64 and the external cylindrical member 66; a reforming portion 94 is constituted between the outside circumferential surface of the inside cylindrical member 64 and the inside circumferential surface of the intermediate cylindrical member 65. Also, the ring-shaped space between the outer circumferential surface of the intermediate cylindrical member 65 and the inside circumferential surface of the external cylindrical member 66 functions as a fuel gas supply flow path 20. Therefore the reforming portion 94 and the fuel gas supply flow path 20 receive heat from the combustion of residual fuel at the top end of the exhaust collection chamber 18 in individual fuel cells 16. The top end portion of the inside cylindrical member 64 and the top end portion of the external cylindrical member 66 are joined in an airtight manner by welding, while the top end of the fuel gas supply flow path 20 is closed off. Also, the bottom end of the intermediate cylindrical member 65 and the outer circumferential surface of the inside cylindrical member 64 are joined in an airtight manner by welding.

The inside cylindrical vessel 68 is a circular section cup-shaped member disposed around the outside cylinder member 66, the side surface of which is formed to have an approximately similar shape to the outside cylinder member 66, so that an annular flow path of essentially fixed width is formed between it and the outside cylinder member 66. This inside cylindrical vessel 68 is disposed to cover the open portion at the top end of the inside cylindrical member 64. The ring-shaped space between the outer circumferential surface of the external cylindrical member 66 and the inside circumferential surface of the inside cylindrical vessel 68 functions as an exhaust gas discharge flow path 21 (Fig. 2). This exhaust gas discharge flow path 21 communicates with the space within the inside cylindrical member 64 through the multiple small holes 64a in the top end portion of the inside cylindrical member 64. The exhaust gas discharge pipe 58, being an exhaust gas discharge port, is connected at the lower portion side surface of the inside cylindrical vessel 68, and the exhaust gas discharge flow path 21 communicates with the exhaust gas discharge pipe 58.

A combustion catalyst 60 and a sheath heater 61 for heating same are disposed on the lower portion of the exhaust gas discharge flow path 21.

The combustion catalyst 60 is a catalyst filled into the circular ring-shaped space between the outside circumferential surface of the outside cylinder member 66 and the inside circumferential surface of the inside cylindrical vessel 68, above the exhaust gas discharge pipe 58. In passing through the combustion catalyst 60, carbon monoxide is removed from exhaust gas descending the exhaust gas discharge flow path 21 to be discharged from the exhaust gas exhaust pipe 58.

The sheath heater 61 is an electrical heater attached so as to surround the outer circumferential surface of the outside cylindrical member 66 at the bottom of the combustion catalyst 60. Upon startup of the solid oxide fuel cell apparatus 1, the combustion catalyst 60 is heated to an activation temperature by the energizing sheath heater 61.

The outside cylindrical vessel 70 is a cup-shaped member with a circular cross section disposed around the inside cylindrical vessel 68, the side surface of which is formed to have an approximately similar shape to the inside cylindrical vessel 68, so that an annular flow path of an appropriate fixed width is formed between it and the inside cylindrical vessel 68. The space between the outer circumferential surface of the inside cylindrical vessel 68 and the inside circumferential surface of the outside cylindrical vessel 70 functions as an oxidant gas supply fuel path 22. The oxidant gas introducing pipe 56 is connected to the lower portion side surface of the outside cylindrical vessel 70; the oxidant gas supply fuel path 22 communicates with the oxidant gas introducing pipe 56.

The dispersion chamber bottom member 72 is an approximately circular plate-shaped member, hermetically affixed with ceramic adhesive to the inside wall surface of the inside cylindrical member 64. A fuel gas dispersion chamber 76 is thus constituted between the first affixing member 63 and the dispersion chamber bottom member 72. Also, an insertion pipe 72a for the insertion of bus bars 80 (Fig. 2) is provided at the center of the dispersion chamber bottom member 72. The bus bars 80, electrically connected to each individual fuel cell 16, are routed to outside of the fuel cell housing case 8 through this insertion pipe 72a. Ceramic adhesive is filled into the insertion pipe 72a, thereby securing the airtightness of the exhaust gas collection chamber 76. In addition, thermal insulation 72b (Fig. 2) is disposed around the periphery of the insertion pipe 72a.

An oxidant gas injection pipe 74 for jetting generating air, circular in cross section, is attached so as to hang down from the ceiling surface of the inside cylindrical vessel 68. This oxidant gas injection pipe 74 then extends in the vertical direction on the center axis line of the inside cylindrical vessel 68, and each fuel cell 16 is disposed on concentric circles around it. By attaching the top end of the oxidant gas injection pipe 74 to the ceiling surface of the inside cylindrical vessel 68, the oxidant gas supply flow path 22, formed between the inside cylindrical vessel 68 and the external cylindrical vessel 70, is made to communicate with the oxidant gas injection pipe 74. Air supplied via the oxidant gas supply flow path 22 is injected downward from the tip of the oxidant gas injection pipe 74, hitting the top surface of the first affixing member 63 and spreading to the entire interior of the generating chamber 10.

The combustion gas dispersion chamber 76 is a cylindrical airtight chamber constituted between the first affixing member 63 and the dispersion chamber bottom member 72, on the top surface of which each of the fuel cells 16 are arranged in a row. The inside fuel electrode of each individual fuel cell 16 attached to the top surface of the first affixing member 63 communicates with the interior of the fuel gas dispersion chamber 76. The bottom end portion of each individual fuel cell 16 penetrates the insertion holes 63a in the first affixing member 63 and projects into the fuel gas dispersion chamber 76, so that each fuel cell 16 is affixed by adhesion to the first affixing member 63.

As shown in Fig. 2, multiple small holes 64b are disposed in the inside cylindrical member 64 below the first affixing members 63. The space between the outer circumference of the inside cylindrical member 64 and the inner circumference of the intermediate cylindrical member 65 communicates with the inside of fuel gas dispersion chamber 76 through multiple small holes 64b. Supplied fuel first rises through the space between the inside perimeter of external cylindrical member 66 and the outside perimeter of intermediate cylindrical member 65, then descends through the space between the outside perimeter of inside cylindrical member 64 and the inside perimeter of intermediate cylindrical member 65, flowing into fuel gas dispersion chamber 76 through multiple small holes 64b. Fuel gas which has flowed into the fuel gas dispersion chamber 76 is distributed to each individual fuel cell 16 attached to the ceiling surface of the fuel gas dispersion chamber 76 (first affixing member 63).

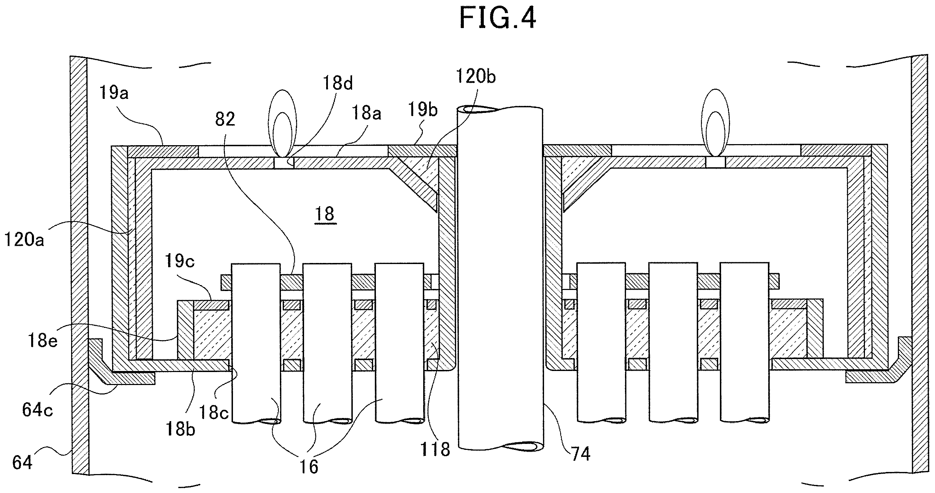

In addition, the bottom end portion of the individual fuel cells 16 projecting into the combustion gas dispersion chamber 76 is electrically connected to the bus bars 80 in the combustion gas dispersion chamber 76, and power is extracted to the outside through the electrical conductor conduit 72a. Bus bars 80 are elongated metal conductors for extracting power produced by each fuel cell 16 to the outside of the fuel cell housing case 8, affixed to the dispersion chamber bottom member 72 insertion pipe 72a through the insulator 78. The bus bars 80 are electrically connected to a current collector 82 attached to each fuel cell 16 on the interior of the fuel gas dispersion chamber 76. The bus bars 80 are also connected on the outside of the fuel cell housing case 8 to an inverter 54 (Fig. 1). Note that the current collector 82 is also attached to the top end portions of each fuel cell 16 projecting into the exhaust collection chamber 18 (Fig. 4) . The multiple individual fuel cells 16 are electrically interconnected in parallel by these current collectors 82 at top and bottom end portions; multiple groups of parallel-connected individual fuel cells 16 are connected in series, and both ends of these serially connections are respectively connected to the bus bars 80.

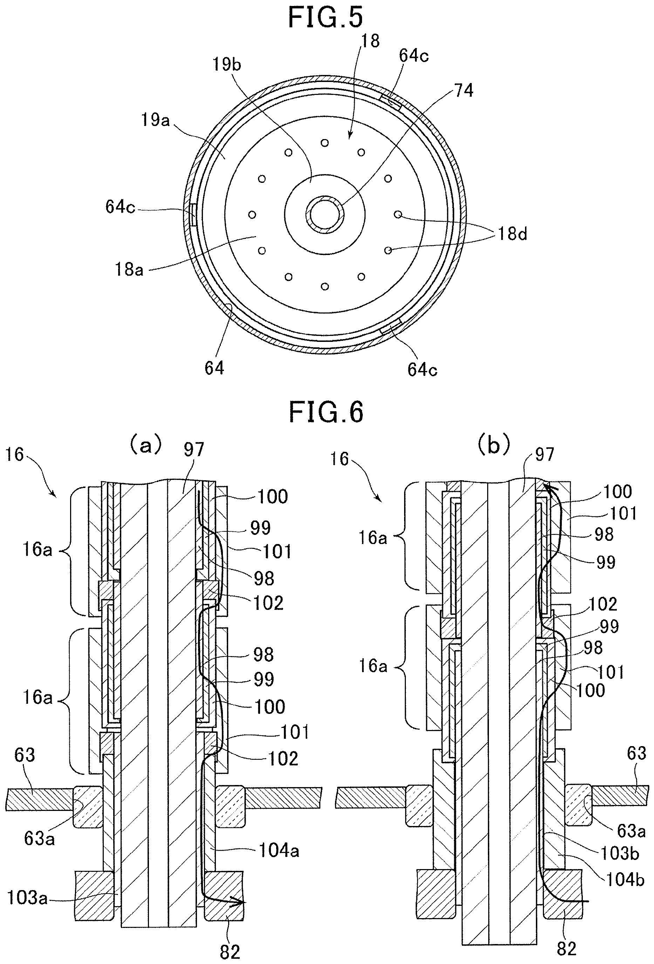

Next, referring to Figs. 4 and 5, we explain the constitution of the exhaust collection chamber.

Fig. 4 is a cross section showing an expanded view of the exhaust collection chamber part; Fig. 5 is a cross section through V-V in Fig. 2.

As shown in Fig. 4, the exhaust collection chamber 18 is a chamber, donut-shaped in cross section, attached to the top end portion of the individual fuel cells 16; an oxidant gas injection pipe 74 penetrates and extends at the center of this exhaust collection chamber 18.

As shown in Fig. 5, three stays 64c for supporting the exhaust collection chamber 18 are attached at equal intervals on the inside wall surface of the inside cylindrical member 64. As shown in Fig. 4, the stays 64c are small tabs of bent thin metal plate; by mounting the exhaust collection chamber 18 on each of the stays 64c, the exhaust collection chamber 18 is concentrically positioned relative to the inside cylindrical member 64. Thus the gap between the outside circumferential surface of the exhaust collection chamber 18 and the inside circumferential surface of the inside cylindrical member 64, and the gap between the inside circumferential surface of the exhaust collection chamber 18 and the outside circumferential surface of the oxidant gas injection pipe 74, are respectively made uniform over the entire circumference (Fig. 5).

The exhaust collection chamber 18 is comprised by the hermetic joining of a collection chamber upper member 18a and a collector chamber lower member 18b.

The collector chamber lower member 18b is a circular plate-shaped member open at the top, in the center of which a cylindrical portion is formed to allow the oxidant gas injection pipe 74 to penetrate.

The collection chamber upper member 18a is a circular plate-shaped member open at the top, in the center of which an opening portion is formed to allow the oxidant gas injection pipe 74 to penetrate. The collection chamber upper member 18a has a shape capable of fitting into the doughnut shaped cross-sectional region open at the top of the collection chamber lower member 18b.

Ceramic adhesive is filled and hardened in the gap between the inside circumferential surface of the wall around the collector chamber lower member 18b and the outside circumferential surface of the collection chamber upper member 18a, assuring hermetic sealing of this joining portion. A large diameter seal 19a is disposed over the ceramic adhesive layer formed by the ceramic adhesive filled into this joint portion, covering the ceramic adhesive layer. The large diameter seal ring 19a is a ring-shaped thin plate, disposed to cover the filled-in ceramic adhesive layer after the ceramic adhesive is filled, and affixed to the exhaust collection chamber 18 by hardening of the adhesive.

On the other hand, ceramic adhesive is also filled in between the outside circumferential surface of the cylindrical portion at the center of the collector chamber lower member 18b, and the edge of the opening portion at the center of the collection chamber upper member 18a, then hardened to secure air-tightness at this joint portion. A small diameter seal ring 19b is disposed over the ceramic adhesive layer formed by the ceramic adhesive filled into this joint portion, covering the ceramic adhesive layer. The small diameter seal ring 19b is a ring-shaped thin plate, disposed to cover the filled-in ceramic adhesive layer after the ceramic adhesive is filled, and affixed to the exhaust collection chamber 18 by hardening of the adhesive.

Multiple circular insertion holes 18c are formed on the bottom surface of the collector chamber lower member 18b. The top end portions of each fuel cell 16 respectively penetrate each of the insertion holes 18c, and each fuel cell 16 penetrates each of the insertion holes 18c and extends. Ceramic adhesive is flowed onto the bottom surface of the collection chamber lower member 18b, which is penetrated by individual fuel cells 16; hardening of the adhesive fills in the gap between the outer circumference of each individual fuel cell 16 and the insertion holes 18c in an airtight manner, and results in the affixing of each fuel cell 16 to the collection chamber lower member 18b.

In addition, a circular thin-plate cover member 19c is disposed on top of the ceramic adhesive poured onto the bottom surface of the collector chamber lower member 18b, and is affixed to the collector chamber lower member 18b by hardening of the ceramic adhesive. Multiple insertion holes are formed in the cover member 19c at the same positions as each of the insertion holes 18c in the collection chamber lower member 18b, and the top end portions of each fuel cell 16 penetrate and extend through this ceramic adhesive layer and the cover member 19c.

On the other hand, multiple jet ports 18d for jetting collected fuel gas are formed on the ceiling surface of the exhaust collection chamber 18 (Fig. 5). The jet ports 18d are disposed in a circle on the collection chamber upper member 18a. Remaining fuel not used for electrical generation flows out from the top end of each fuel cell 16 into the exhaust collection chamber 18, and fuel collected inside the exhaust collection chamber 18 flows out from the jet ports 18d, where it is combusted.

Next, referring to Fig. 2, we discuss a constitution for reforming raw fuel gas supplied from the fuel supply source 30.

First, an evaporating portion 86 for vaporizing water for steam reforming is provided at the lower portion of the fuel gas supply flow path 20, which is constituted by the space between the inside cylinder member 64 and the outside cylinder member 66. The evaporating portion 86 is formed by a ring-shaped angled plate 86a attached to the bottom inside perimeter of the outside cylinder member 66, and by the water supply pipe 88. The evaporating portion 86 is also disposed under the oxidant gas introducing pipe 56 for introducing generating air, and above the exhaust gas discharge pipe 58 for discharging exhaust gas. The sloped plate 86a is a thin metal plate formed in a circular ring shape, the outer circumferential edge of which is attached to the inside wall surface of the outside cylinder member 66. On the other hand, the inside perimeter edge of the sloped plate 86a is positioned above its outside perimeter edge, and a gap is formed between the inside perimeter edge of the sloped plate 86a outside wall surface of the inside cylindrical member 64.

The water supply pipe 88 extends from the bottom end of the inside cylindrical member 64 in the vertical direction to the inside of the fuel gas supply flow path 20; water for steam reforming supplied from the water flow volume regulator unit 28 is supplied to the evaporating portion 86 through the water supply pipe 88. The top end of water supply pipe 88 penetrates sloped plate 86a and extends up to the top surface side of the sloped plate 86a; water supplied to the top surface side of the sloped plate 86a accumulates between the top surface of the sloped plate 86a and the inside wall surface of the outside cylinder member 66. Water supplied to the top surface of the sloped plate 86a is vaporized there to produce steam.

A fuel gas introduction portion for introducing raw fuel gas into the fuel gas supply flow path 20 is disposed at the bottom of the evaporating portion 86, sandwiching a partition 91 serving as a circular ring-shaped metal plate on which multiple jet ports 91a are disposed at equal spacing. Raw fuel gas fed from a fuel blower 38 is introduced into the fuel gas supply flow path 20 via a fuel gas supply pipe 90. The fuel gas supply pipe 90 extends in a plumb direction from the bottom end of the inside cylindrical member 64 in the fuel gas supply flow path 20. The top end of the fuel gas supply pipe 90 is positioned below the partition 91. Raw fuel gas introduced from the fuel gas supply pipe 90 first accumulates in a space at the bottom side of the partition 91, then passes through each of the jet ports 91a and is injected into the space on the top sides of the partition 91 (i.e., the space containing the evaporating portion 86). Fuel gas injected from the jet ports 91a is introduced to the bottom side of the sloped plate 86a and rises to the top side of the sloped plate 86a as the flow path is being constricted by the slope of the sloped plate 86a. Raw fuel gas rising to the top side of the sloped plate 86a rises together with the steam produced by the evaporating portion 86.

A mixing plate 110, being a circular ring-shaped metal plate disposed to vertically divide the circular ring-shaped space between the inner circumference of the outside cylindrical member 66 and the outer circumference of the inside cylindrical member 64, is disposed above the evaporating portion 86 inside the fuel gas supply flow path 20. A single communication hole 110a is provided on the top perimeter of this mixing plate 110, through which the spaces on the top and bottom sides of the mixing plate 110 communicate. The communication hole 110a is placed in the position opposed to the position where the water supply pipe 88 and the fuel gas supply pipe 90 are disposed, across the center axis of the mixing plate 110 (matching the center axis of the inside cylindrical member 64, the outside cylindrical member 66, etc.). Raw fuel gas injected from the jet ports 91a and steam generated by the evaporating portion 86 first accumulates in the space on the underside of the mixing plate 110, then is introduced through the communication hole 110a into the space on the top side of the mixing plate 110.

A mixing plate 111, being a circular ring-shaped metal plate disposed to vertically divide the circular ring-shaped space between the inner circumference of the outside cylindrical member 66 and the outer circumference of the inside cylindrical member 64, is further provided above the mixing plate 110. The mixing plate 111 is disposed in close proximity to the mixing plate 110. A single communication hole 111a is provided on the top perimeter of this mixing plate 111, through which the spaces on the top side and the bottom side of the mixing plate 111 communicate. The communication hole 111a is placed in the position opposed to the position where the communication hole 110a is formed in the mixing plate 110, across the center axis of the mixing plate 111 (matching the center axis of the inside cylindrical member 64, the outside cylindrical member 66, etc.) . Steam and raw fuel gas introduced from the communication hole 110a of the mixing plate 110 move through the space between the mixing plate 110 and the mixing plate 111, and is introduced into the space on the top side of the mixing plate 111 via the communication hole 111a of the mixing plate 111. In this case, because of the narrow vertical width of the space between the mixing plates 110 and 111, the raw fuel gas and steam are mixed while the raw fuel gas and steam move horizontally.

A dispersion plate 112, being a circular ring-shaped metal plate disposed to vertically divide the circular ring-shaped space between the inner circumference of the intermediate cylindrical member 65 and the outer circumference of the inside cylindrical member 64, is further disposed above the mixing plate 111. The mixing plate 112 is disposed at a distance from the mixing plate 111. Specifically, the vertical distance between the dispersion plate 112 and the mixing plate 111 is longer than the vertical distance between the mixing plate 110 and the mixing plate 111. Multiple communication holes 112a are formed over the perimeter of the dispersion plate 112, allowing the spaces on the top bottom side of the dispersion plate 112 to communicate. Raw fuel gas and steam introduced from the mixing plate 111 communication hole 111a move to the space between the mixing plate 111 and the dispersion plate 112, and are introduced through each of the communication holes 112a into the space on the top side of the dispersion plate 112. In this case, because of the wide vertical width in the space between the mixing plate 111 and the dispersion plate 112, the raw fuel gas and steam are mixed while the raw fuel gas and steam move upward.

On the other hand, a reforming portion 94 is disposed on the top portion of the circular ring-shaped space between the inner circumference of the intermediate cylindrical member 65 and the outer circumference of the inside cylindrical member 64. A dispersion plate 113, being a metal plate, is installed at the top portion of the reforming portion 94. The dispersion plate 113 is constituted in a circular ring shape to cover the top end of the reforming portion 94, on which multiple communication holes 113a are provided at equal spacing. Raw fuel gas and steam which have passed through the communication holes 112a in the dispersion plate 112 rises to the top of the dispersion plate 112. Then, raw fuel gas and steam drop when they hit the inside wall on the top surface of the outside cylindrical member 66, and flow into the reforming portion 94 through each of the communication holes 113a in the dispersion plate 113. In this case, the effect of the multiple communication holes 113a provided on the dispersion plate 113 is that the mixed gas is introduced uniformly into the reforming portion 94.

The reforming portion 94 is disposed to surround the top portion of each fuel cell 16 and the perimeter of the exhaust collection chamber 18 at the top thereof. The reforming portion 94 comprises a catalyst holding plate (not shown) attached to the outer wall surface of the inside cylindrical member 64, and a reforming catalyst 96 held by same.

Thus, when raw fuel gas and steam mixed in the fuel gas supply flow path 20 on the upstream side of the reforming portion 94 contact the reforming catalyst 96 filled into reforming portion 94, the steam reforming reaction SR shown in Formula (1) proceeds inside the reforming portion 94.

CₘHₙ + xH₂0 → aCO₂ + bCO + cH₂ (1)

Fuel gas reformed in the reforming portion 94 flows downward in the space between the inner circumference of the intermediate cylindrical member 65 and the outer circumference of the inside cylindrical member 64, then flows into the combustion gas dispersion chamber 76 to supply to each fuel cell 16. The steam reforming reaction SR is an endothermic reaction, but the heat required for the reaction is supplied by the combustion heat of off-gas flowing out from the exhaust collection chamber 18 and the emitted heat produced in each fuel cell 16.

Next, referring to Figs. 6(a) and 6(b), we explain the individual fuel cells 16.

In the solid oxide fuel cell apparatus 1 according to an embodiment of the present invention, cylindrical lateral band cells using a solid oxide are employed for the individual fuel cells 16. Multiple single cells 16a are arranged in lateral band form on each individual fuel cell 16, and individual fuel cells 16 are constituted by electrically connecting these cells together in series. Each fuel cell 16 comprises an anode (positive electrode) at one end and a cathode (negative electrode) at the other end; of the multiple individual fuel cells 16, half are disposed so that the top end is an anode and the bottom end is a cathode, while the other half are disposed so that the top end is a cathode and the bottom end is an anode.

Fig. 6 (a) is a cross section showing an expanded view of the bottom end portion of the individual fuel cells 16 on which the bottom end is used as a cathode. Fig. 6 (b) is a cross section showing an expanded view of the bottom end portion of the individual fuel cells 16 on which the bottom end is used as an anode.

As shown in Figs. 6(a) and 6(b), individual fuel cells 16 are formed from narrow, elongated porous support bodies 97 and multiple layers formed in lateral bands on the outside of these porous support bodies 97. In the following order, starting from the inside, a fuel electrode 98, a reaction suppression layer 99, a solid electrolyte layer 100, and an air electrode 101 are respectively formed in a lateral band shape around the porous support bodies 97. Therefore fuel gas supplied via the fuel gas dispersion chamber 76 flows into the porous support bodies 97 of the individual fuel cells 16, and air injected from the oxidant gas injection pipe 74 flows to the outside of the air electrode 101. Each of the single cells 16a formed at the top of individual fuel cells 16 is comprised of one set of a fuel electrode 98, a reaction suppression layer 99, a solid electrolyte layer 100, and an air electrode 101. The fuel electrode 98 in a single cell 16a is electrically connected to the air electrode 101 of the adjacent single cell 16a through an interconnector layer 102. By this means the multiple single cells 16a formed on a single individual fuel cell 16 are electrically connected in series.

As shown in Fig. 6(a), an electrode layer 103a is formed on the outside perimeter of the porous support bodies 97, at the cathode end portion of the individual fuel cells 16, and a lead film layer 104a is formed on the outside of this electrode layer 103a. In the cathode-side end portion, the air electrode 101 and the electrode layer 103a of the single cells 16a positioned at the end portions are electrically connected by the interconnector layer 102. This electrode layer 103a and lead film layer 104a are formed to penetrate the first affixing member 63 at the end portion of the individual fuel cells 16, and to project further downward than the first affixing member 63. The electrode layer 103a is formed down to a point below the lead film layer 104a, and the current collector 82, exposed to the outside, is electrically connected to the electrode layer 103a. Thus the air electrodes 101 of the single cells 16a positioned at the end portions are connected to the current collector 82 through an interconnector layer 102 and the electrode layer 103a, and electrical current flows as shown by the arrow in the diagram. Ceramic adhesive is filled into the gap between the edge of the insertion holes 63a on the first affixing member 63 and the lead film layer 104a, and individual fuel cells 16 are affixed to the first affixing member 63 on the outer circumference of the lead film layer 104a.

As shown in Fig. 6(b), the fuel electrode layer 98 of single cell 16a positioned on the end portion is extended at the anode end portion of an individual fuel cells 16, and the extending portion of the fuel electrode layer 98 functions as an electrode layer 103b. A lead film layer 104b is formed on the outside of the electrode layer 103b. This electrode layer 103b and lead film layer 104b are formed to penetrate the first affixing member 63 at the end portion of the individual fuel cells 16, and to project further downward than first affixing member 63. The electrode layer 103b is formed further down than the lead film layer 104b, and the power collector 82 is electrically connected to the electrode layer 103b, exposed to the outside. Thus, the single cell 16a fuel electrode layer 98 is connected to the current collector 82 through the electrode layer 103b, integrally formed as a single piece, and current flows as indicated by the arrow in the figure. Ceramic adhesive is filled into the gap between the edge of the insertion holes 63a on the first affixing member 63 and the lead film layer 104b, and individual fuel cells 16 are affixed to the first affixing member 63 on the outer circumference of the lead film layer 104b.

In Figs. 6(a) and 6(b) we explained the constitution of the bottom end portion of the individual fuel cells 16; the constitution of the individual fuel cells 16 at the top end portion is the same. Note that at the top end portion, the individual fuel cells 16 are affixed to the collection chamber lower member 18b of the exhaust collection chamber 18; the constitution of the affixing part is the same as when affixing to the first affixing member 63 at the bottom end portion.

Next we explain the constitution of the porous support body 97 and of each layer.

In this embodiment the porous support body 97 is formed by extrusion of a mixture of forsterite powder and a binder, followed by sintering. In the embodiment, the fuel electrode 98 is an electrically conductive thin film comprised of a mixture of NiO powder and 10YSZ (10mol% Y₂O₃ - 90mol% ZrO₂) powder.

In the embodiment, the reaction suppression layer 99 is a thin film comprising cerium compound oxide (LDC 40; i.e., 40 mol% La₂O₃ - 60 mol% CeO₂) or the like, by which chemical reactions between fuel electrode 98 and solid electrolyte layer 100 are constrained. In the embodiment, solid electrolyte layer 100 is a thin film comprising an LSGM powder composition of La_{0.9}Sr_{0.1}Ga_{0.8}Mg_{0.2}O₃. Electrical energy is produced by the reaction between oxide ions and hydrogen or carbon monoxide through this solid electrolyte layer 100.

In the embodiment, air electrode 101 is an electrically conductive thin film comprising a powder composition of La_{0.6}Sr_{0.4}Co_{0.8}Fe_{0.2}O₃.

In the embodiment, the interconnector layer 102 is an electrically conductive thin film comprising SLT (lanthanum doped strontium titanate). Adjacent single cells 16a in the individual fuel cells 16 are connected via the interconnector layer 102.

In the embodiment, the electrode layers 103a and 103b are formed of the same material as the fuel electrode 98.

In the embodiment, the lead film layers 104a and 104b are formed of the same material as the solid electrolyte layer 100.

Next, referring to Figs. 1 and 2, we explain the mode of operation of the solid oxide fuel cell apparatus 1.

First, in the solid oxide fuel cell apparatus 1 startup step, the fuel blower 38 is started up and supply of fuel is commenced, while the sheath heater 61 is also energized. By energizing the sheath heater 61, the combustion catalyst 60 disposed above the sheath heater 61 is heated, and the evaporating portion 86 disposed therein is also heated. Fuel supplied by the fuel blower 38 flows from the fuel gas supply pipe 90 via the desulfurizer 36, heat exchanger 34, and electromagnetic valve 35 into the interior of the fuel cell housing case 8. In-flowing fuel, after rising up to the top end within the fuel gas supply flow path 20, drops down within the reforming portion 94, then through small holes 64b placed on the bottom portion of the inside cylindrical member 64, into the fuel gas dispersion chamber 76. Note that because the temperature of the reforming catalyst 96 in the reforming portion 94 has not risen sufficiently, no fuel reforming is performed immediately after the solid oxide fuel cell apparatus 1 startup step.

Fuel gas which has flowed into the fuel gas dispersion chamber 76 flows through the inside (the fuel electrode side) of each fuel cell 16 attached to the first affixing member 63 of the fuel gas dispersion chamber 76, then into the exhaust collection chamber 18. Note that immediately after startup of the solid oxide fuel cell apparatus 1, the temperature of the individual fuel cells 16 has not risen sufficiently, nor is power being extracted to the inverter 54, therefore no electrical generating reaction occurs.

Fuel flowing into the exhaust collection chamber 18 is jetted out from the jet ports 18d in the exhaust collection chamber 18. Fuel jetted from the jet ports 18d is ignited by the ignition heater 62 and combusted. The reforming portion 94, disposed around the exhaust collection chamber 18, is heated by this combustion. Exhaust gas produced by combustion flows into the exhaust gas discharge flow path 21 through small holes 64a formed in the top portion of the inside cylindrical member 64. High temperature exhaust gas descends within the exhaust gas discharge flow path 21, heating fuel flowing in the fuel gas supply flow path 20 disposed therein and generating air flowing in the oxidant gas supply flow path 22 disposed on the outside thereof. In addition, exhaust gas passes through the combustion catalyst 60 disposed within the exhaust gas discharge flow path 21, thereby removing carbon monoxide, then passes through the exhaust gas exhaust pipe 58 to be discharged from the fuel cell housing case 8.

When the evaporating portion 86 is heated by the exhaust gas and the sheath heater 61, water for steam reforming supplied to the evaporating portion 86 is vaporized and steam is produced. Water for steam reforming is supplied by the water flow volume regulator unit 28 to the evaporating portion 86 in the fuel cell housing case 8, via the water supply pipe 88. Steam produced by the evaporating portion 86 and fuel supplied through the fuel gas supply pipe 90 are sufficiently mixed in the process of moving through the fuel gas supply flow path 20 to the reforming portion 94 (described in detail below).

Fuel and steam mixed in this manner flow into the reforming portion 94 through communication holes 113a formed in the dispersion plate 113. If the reforming catalyst 96 in the reforming portion 94 has risen to a temperature at which reforming is possible, a steam reforming reaction occurs when the mixed gas of fuel and steam passes through the reforming portion 94, and mixed gas is reformed into a hydrogen-rich fuel. Reformed fuel passes through small holes 64b and flows into the fuel gas dispersion chamber 76. A large number of small holes 64b are formed around the fuel gas dispersion chamber 76, and sufficient capacity is thus assured for the fuel gas dispersion chamber 76, therefore reformed fuel flows in uniformly to the individual fuel cells 16 projecting into the fuel gas dispersion chamber 76.

At the same time air, which is the oxidant gas supplied by the air flow regulator unit 45, flows through the oxidant gas introducing pipe 56 into the oxidant gas supply flow path 22. Air flowing into the oxidant gas supply flow path 22 rises up in the oxidant gas supply flow path 22 as it is heated by the exhaust gas flowing on the inside thereof. Air rising in the oxidant gas supply flow path 22 is concentrated at the center of the top end portion inside the fuel cell housing case 8, and flows into the oxidant gas injection pipe 74, which communicates with the oxidant gas supply flow path 22. Air flowing into the oxidant gas injection pipe 74 is injected from the bottom end thereof into the generating chamber 10; the injected air then hits the top surface of the first affixing member 63 and spreads throughout the entire generating chamber 10. Air flowing into the generating chamber 10 rises up through the gap between the outer circumference wall of the exhaust collection chamber 18 and the inner circumference wall of the inside cylindrical member 64, and through the gap between the inside circumferential wall of the exhaust collection chamber 18 and the outside circumferential surface of the oxidant gas injection pipe 74.

At this point a portion of the air flowing over the exterior (air electrode side) of each fuel cell 16 is used for the generating reaction. In addition, a portion of the air which has risen to the top of the exhaust collection chamber 18 is used to combust the fuel injected from the exhaust collection chamber 18 jet ports 18d. Exhaust gas produced by combustion and air not used for electrical generation or combustion passes through the small holes 64a and flows into the exhaust gas discharge flow path 21. Exhaust gas and air flowing into the exhaust gas discharge flow path 21 is discharged after carbon monoxide is removed by the combustion catalyst 60.

When the temperature of the individual fuel cells 16 thus rises to approximately 650°C, at which electrical generation is possible, reformed fuel flows to the inside (electrode side) of the individual fuel cells 16, while air flows to the outside (air electrode side), producing an electromotive force by chemical reaction. In this state, power is extracted from each fuel cell 16 and electricity is generated when the inverter 54 is connected to the bus bars 80, which are routed out from the fuel cell housing case 8.

In the solid oxide fuel cell apparatus 1 of the embodiment, generating air is injected from the oxidant gas injection pipe 74 disposed at the center of the generating chamber 10 and rises up through the uniform gap between the exhaust collection chamber 18 and the inside cylindrical member 64 within the generating chamber 10, and through the uniform gap between the exhaust collection chamber 18 and the oxidant gas injection pipe 74. Therefore the flow of air inside the generating chamber 10 is essentially completely axially symmetrical, and air flows uniformly around each individual fuel cell 16. Temperature differences between individual fuel cells 16 are thereby constrained, and a uniform electromotive force can be produced by each fuel cell 16.

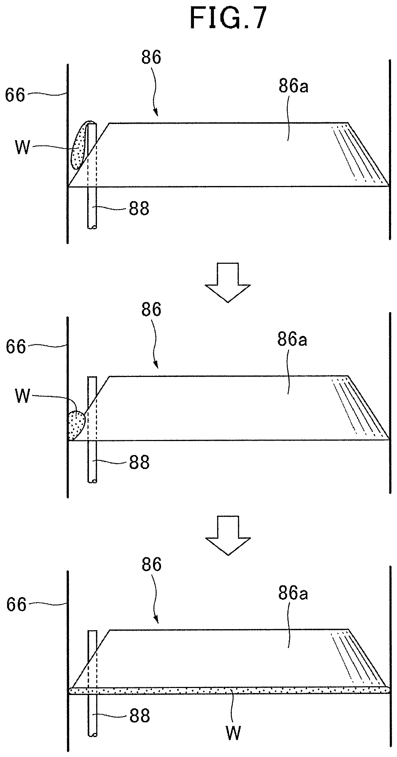

Next, referring to Fig. 7, we explain the mode of operation of an evaporating portion 86 according to the present embodiment. Fig. 7 is a side elevation showing only the sloped plate 86a of the evaporating portion 86, seen through the wall of the outside cylindrical member 66, for the purpose of explaining the dispersion of water by the sloped plate 86a.

First, as shown in the top portion of Fig. 7, a tiny amount of water W flows out of the water supply pipe 88; that water W falls onto the top surface of the sloped plate 86a, then flows down the slope of the sloped plate 86a. Next, as shown in the middle portion of Fig. 7, a tiny amount of water W temporarily accumulates as water droplets in the gap formed between the top surface of the sloped plate 86a and the inside wall surface of the outside cylindrical member 66. Immediately thereafter, as shown in the bottom portion of Fig. 7, the tiny amount of water W spreads by capillary action over the entire gap formed by the top surface of the sloped plate 86a and the inside wall surface of the outside cylindrical member 66. I.e., a tiny amount of water W is dispersed over the entire perimeter of the outer circumferential edge of the sloped plate 86a.

This "capillary action" does not refer to the phenomenon in general use, namely the phenomenon by which water rises inside a narrow tubular body (capillary) due to surface tension; rather it refers to the phenomenon by which water inside a narrow indentation (a channel or the like) extending in a direction substantially parallel to the ground moves due to surface tension. The latter phenomenon is also used as "capillary action" in heat pipe (heat pump) technology and the like.

Thus, according to the present embodiment, tiny amounts of water supplied from the water supply pipe 88 to the evaporating portion 86 can be appropriately dispersed by using the evaporating portion 86 which utilizes capillary action. As a result, steam and raw fuel gas mixing quality can thus be improved, and the S/C ratio (the stoichiometric ratio between steam and the total amount of carbon contained in the raw fuel gas) can be appropriately managed. Also, bumping in the evaporating portion 86 can be prevented, since water does not continuously accumulate in a partial area on the evaporating portion 86. This enables the prevention of individual fuel cell degradation and the like due to fuel depletion.

According to the present embodiment, because an acute angled indented portion is formed by utilizing the inside wall surface of the outside cylindrical member 66 and disposing a sloped plate 86a thereon, capillary action can be achieved using a simple structure.

Also, although, because of a cylindrical module (see Fig. 2), the volume of the evaporating portion 86 relative to tiny amounts of water is large, therefore water dispersion tends to be difficult, stable dispersion characteristics for tiny amounts of water can be assured by using a circular ring-shaped sloped plate 86a over the entire inside circumference of the outside cylindrical member 66. Specifically, when using an evaporating portion 86 constituted by a circular sloped plate 86a as in the present embodiment, water can be more effectively dispersed compared to a constitution using an evaporator with a non-circular ring containing corners (such as a rectangular ring), since tiny amounts of water quickly reach the entire evaporating portion 86.

In the present embodiment, since a sheath heater 61 is placed over the entire circumference at a position on the outside circumferential surface of the outside cylindrical member 66 corresponding to the evaporating portion 86 (Fig. 2) in order to heat the entire circumference of the evaporating portion 86, steam can be produced uniformly over the entire evaporating portion 86. Steam required for reforming by the reforming portion 94 can be appropriately produced by heating the evaporating portion 86 with the sheath heater 61, even during startup from a low temperature in the solid oxide fuel cell apparatus 1. Also, in the present embodiment, as a result of disposing a sheath heater 61 above the sloped plate 86a of the evaporating portion 86 (see Fig. 2), the position on the outer circumference surface of the outside cylindrical member 66 corresponding to the sloped plate 86a is not heated, so vaporization during the dispersion of tiny amounts of water on the sloped plate 86a can be avoided. Steam can therefore be appropriately generated in the entire evaporating portion 86.

Note that in the embodiment above, capillary action was achieved by placement of a sloped plate 86a on the inside wall surface of the outside cylindrical member 66 to constitute an acute angle-shaped indentation by the gap between the sloped plate 86a and the inside wall surface of the outside cylindrical member 66. In another example, it is also acceptable to achieve capillary action using a circular ring-shaped thin plate, not sloped and substantially parallel to the ground (affixed to the inside wall surface of the outside cylindrical member 66 in the same way as the sloped plate 86a), by placing a narrow, elongated channel as an acute-angled indentation on that thin plate. In such cases, the location on the circular ring-shaped thin plate where water flows out and drops from the water supply pipe 88 can be identified in advance, and a channel can be formed over that entire circumference.

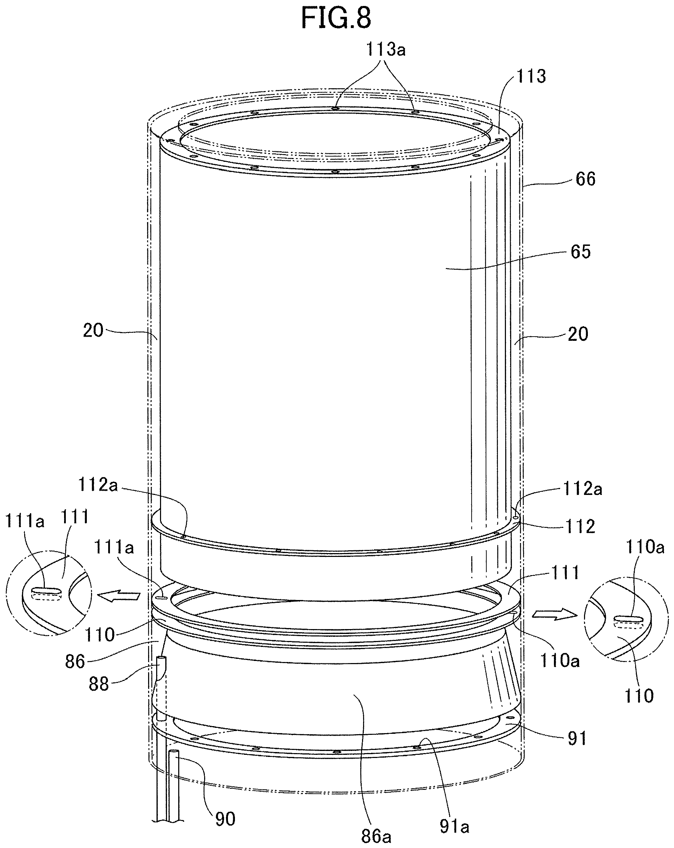

Next, referring to Fig. 8, we explain more specifically the constitution of the mixing plate 110 and the mixing plate 111. Fig. 8 shows in the center a perspective view seen through the outside cylindrical member 66 wall of the constituent elements placed in the space between the inner circumference of the outside cylindrical member 66, and the outer circumference of the inside cylindrical member 64 and the intermediate cylindrical member 65. Specifically, it shows a perspective view of the water supply pipe 88, fuel gas supply pipe 90, sloped plate 86a, mixing plates 110, 111, and dispersion plate 112, etc. The right side of Fig. 8 shows a partial expanded view close to the communication hole 110a formed in the mixing plate 110; the left side of Fig. 8 shows a partial expanded view close to the communication hole 111a formed in the mixing plate 111.

As shown in the center of Fig. 8, single communication holes 110a and 111a are respectively formed in the mixing plates 110 and 111. In addition, the mixing plates 110 and 111 are disposed so that the mixing plate 110 communication hole 110a and the 111 communication hole 111a are positioned on opposite sides so as to sandwich the center axis of the mixing plates 110 and 111 (which match the center axis of the outside cylindrical member 66, etc.). In other words, the mixing plates 110 and 111 are disposed so that the communication hole 110a and communication hole 111a are offset by 180°.

As shown on the left and right sides of Fig. 8, the communication holes 110a and 111a are constituted as elongated hole shapes extending in the radial direction of the mixing plates 110 and 111. I.e., the communication holes 110a and 111a are constituted as elongated hole shapes which transect the passage through which gas transits, formed between the mixing plate 110 and the mixing plate 111.

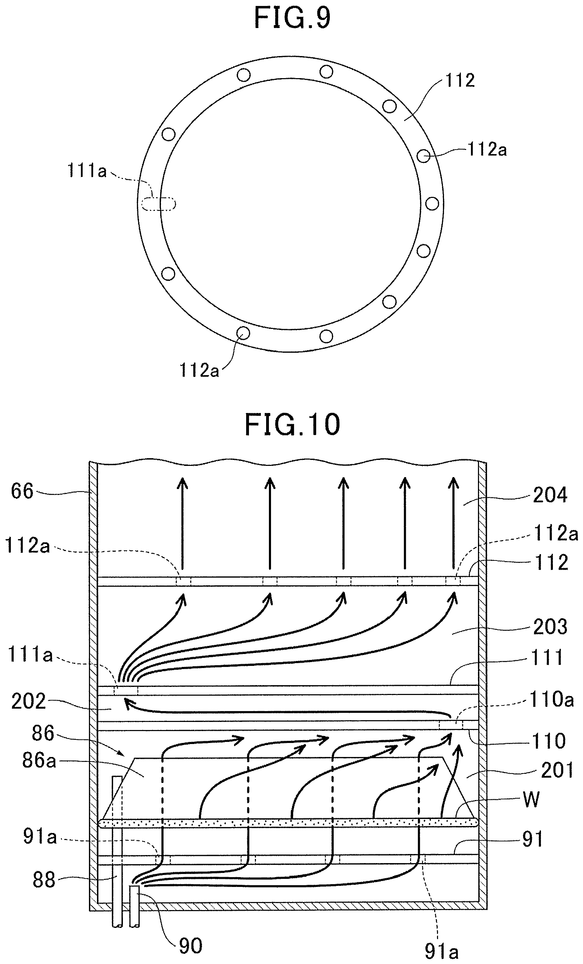

Next, referring to Fig. 9, we explain more specifically the constitution of the dispersion plate 112. Fig. 9 shows a plan view of the dispersion plate 112. In Fig. 9, for reference, the position on the dispersion plate 112 corresponding to the mixing plate 111 communication hole 111a (specifically, the position of the mixing plate 111 communication hole 111a moved vertically to the horizontal plane where the dispersion plate 112 is positioned) is shown by a dotted line.

As shown in Fig. 9, multiple communication holes 112a are formed in the dispersion plate 112. The communication holes 112a are formed in the dispersion plate 112 so as to increase in number (i.e., so that the density of the communication holes 112a increases) in proportion to their distance from the position corresponding to the mixing plate 111 communication hole 111a. In other words, the communication holes 112a in the dispersion plate 112 are formed so that their inter-hole spacing narrows in proportion to distance from the position corresponding to the mixing plate 111 communication hole 111a. More specifically, in order to equalize the amount of gas from each of the communication holes 112a of the dispersion plate 112, the spacing between communication holes 112a is designed according to the distance from a position corresponding to the communication hole 111a of the mixing plate 111, making it easier to supply gas directed in the upward direction of the dispersion plate 112 by injection at positions far from the mixing plate 111 communication hole 111a than at positions close to it (i.e. , so that pressure losses in the communication holes 112a are decreased). Note that requirements are met so long as the supply of mixed gas to the reformer is essentially uniform, and it is of course the case that if uniformity can be assured using equal spacing and the same diameter holes, that is also acceptable.

Next, referring to Fig. 10, we explain the mode of operation of the mixing plate 110, mixing plate 111, and dispersion plate 112, etc. Fig. 10 explains the upward movement of gas through the partition 91, mixing plate 110, mixing plate 111, and dispersion plate 112. Specifically, Fig. 10 shows a side elevation observed through the wall of the outside cylindrical member 66 of the constituent elements disposed in the space between the inner circumference of the outside cylindrical member 66, and the outer circumference of the inside cylindrical member 64 and the intermediate cylindrical member 65 (the same constituent elements as shown in Fig. 8).

First, raw fuel gas injected from the fuel gas supply pipe 90 temporarily accumulates in the space on the bottom side of the partition 91, then passes through each of the jet ports 91a in the partition 91, and is injected into the space on the top side of the partition 91. Fuel gas injected from the jet ports 91a is introduced to the bottom side of the sloped plate 86a and rises to the top side of the sloped plate 86a as the flow path is being constricted by the slope of the sloped plate 86a. Water W supplied from the water supply pipe 88, on the other hand, is dispersed over the entire gap formed by the top surface of the sloped plate 86a and the inside wall surface of the outside cylindrical member 66 (see Fig. 7), and vaporizes on the sloped plate 86a to become steam. Steam produced in this way, together with raw fuel gas introduced from the jet ports 91a, temporarily accumulates in the space on the bottom side of the mixing plate 110 where the evaporating portion 86 is disposed (the first lower portion second mixing chamber 201). Steam and raw fuel gas then pass through the communication hole 110a in the mixing plate 110 which forms the upper wall of the first lower portion second mixing chamber 201, and are introduced into the space on the top side of the mixing plate 110 (the second lower portion second mixing chamber 202).

Normally the generating chamber 10 inside the fuel cell housing case 8 produces a temperature gradient in which the temperature is higher on the upper side than the lower side, therefore a rising air current is produced by this temperature gradient in the fuel gas supply flow path 20, such that steam and raw fuel gas rise within the fuel gas supply flow path 20. As a result, the steam and raw fuel gas in the first lower portion second mixing chamber 201 basically rises in the first lower portion second mixing chamber 201 under the influence of this rising air current, and passes through the communication hole 110a in the mixing plate 110, which forms the upper wall of the first lower portion second mixing chamber 201. Here, in the first lower portion second mixing chamber 201, the locations where water and raw fuel gas are supplied (locations where the water supply pipe 88 and fuel gas supply pipe 90 are disposed), and the mixing plate 110 communication hole 110a, which is the exit point for steam and raw fuel gas, are positioned on opposite sides, sandwiching the center axis of the first lower portion second mixing chamber 201. Therefore much of the steam and raw fuel gas rises as it moves horizontally inside the first lower portion second mixing chamber 201. I.e., steam and raw fuel gas inside the first lower portion second mixing chamber 201 include a large horizontally moving component. Since this type of horizontally moving component opposes the rising air current inside the fuel gas supply flow path 20, steam and raw fuel gas are slowly mixed inside the first lower portion second mixing chamber 201. Therefore the steam and raw fuel gas mixing characteristics can be improved in the first lower portion second mixing chamber 201 where the evaporating portion 86 is disposed. Note that horizontal movement of steam and raw fuel gas inside the first lower portion second mixing chamber 201 (including horizontal movement inside the second lower portion second mixing chamber 202, described below) occurs due to rising air currents in the fuel gas supply flow path 20.

Next, steam and raw fuel gas which has passed through the mixing plate 110 communication hole 110a moves through the space formed between the mixing plate 110 and the mixing plate 111 (the second lower portion second mixing chamber 202) and passes through the communication hole 111a in the mixing plate 111 which forms the second lower portion second mixing chamber 202. In this case, the gap between the mixing plate 110 and the mixing plate 111 is narrow, and the mixing plate 110 communication hole 110a and the mixing plate 111 communication hole 111a are positioned on opposite sides across the center axis of the mixing plates 110 and 111, so the steam and raw fuel gas in the second lower portion second mixing chamber 202 moves horizontally. Since this type of horizontal movement opposes the rising air current inside the fuel gas supply flow path 20, steam and raw fuel gas are slowly mixed inside the second lower portion second mixing chamber 202. In the second lower portion second mixing chamber 202, steam and raw fuel gas mixing characteristics can be greatly improved, because the time during which gas is mixed in this horizontal movement process is relatively long.

Next, steam and raw fuel gas which has passed through the mixing plate 111 communication hole 111a moves through the space formed between the mixing plate 111 and the dispersion plate 112 (the upper portion second mixing chamber 203) and passes through the communication holes 112a in the dispersion plate 112 which forms the upper wall of the upper portion second mixing chamber 203. In this case, because the gap between the mixing plate 111 and the dispersion plate 112 is relatively wide, and multiple communication holes 112a are formed in the dispersion plate 112 (see Fig. 9), steam and raw fuel gas moves upward within the upper portion second mixing chamber 203 in response to the rising air current in the fuel gas supply flow path 20, and is mixed in the process. Also, the dispersion plate 112 forming the upper portion second mixing chamber 203 is constituted so that the number of communication holes 112a (see Fig. 9) increases in proportion to distance from the position corresponding to the communication hole 111a on the mixing plate 111 forming the upper portion second mixing chamber 203, therefore as shown in Fig. 10, much of the mixed gas rises as it moves horizontally in the upper portion second mixing chamber 203. In other words, steam and raw fuel gas inside the upper portion second mixing chamber 203 includes a large horizontally moving component.

Steam and raw fuel gas which has passed through the communication holes 112a in the dispersion plate 112 is then introduced into the space above the dispersion plate 112 (the first mixing chamber 204) . As noted above, in the dispersion plate 112, the spacing between the communication holes 112a is designed according to the distance from a position corresponding to the communication hole 111a of the mixing plate 111, making it easier to supply gas by injection at positions far from the mixing plate 111 communication hole 111a than at positions close to it (see Fig. 9) . Hence injecting essentially the same amounts of gas from each of the communication holes 112a in the dispersion plate 112 results in a uniform supply of gas to the first mixing chamber 204. Thereafter steam and raw fuel gas introduced into the first mixing chamber 204 moves upward in the first mixing chamber 204 in response to the upward air current inside the fuel gas supply flow path 20, and is mixed in the process.

Thus, in the present embodiment, steam and reformer are mixed by vertically arranging the first and second lower portion second mixing chambers 201, 202 and upper portion second mixing chamber 203 for mixing steam and reformer in the process of moving it horizontally, and by the first mixing chamber 204 for mixing steam and raw fuel gas in the process for causing them to rise upward. Specifically it is first mixed in the process for horizontally moving steam and raw fuel gas in the first and second lower portion second mixing chambers 201, 202 and in the upper portion second mixing chamber 203, then mixed in the process for causing the gas to rise upward in the first mixing chamber 204. Therefore the present embodiment enables steam and raw fuel gas to be more slowly mixed compared to a constitution in which steam and raw fuel gas are mixed only in the process for causing them to rise upward (i.e. , a constitution in which a rising air current is used to move the steam and raw fuel gas in only the upward direction). Mixing of steam and raw fuel gas can therefore be improved.

Here, in a solid oxide fuel cell apparatus 1 in which a cylindrical module is applied, it is difficult to uniformly disperse steam and raw fuel gas because the volume of the fuel gas supply flow path 20 is large relative to the tiny amount of water used. However in the present embodiment, because the steam and raw fuel gas are mixed in both the process for moving it in the horizontal direction, and in the process for causing it to rise upward, the steam produced from such tiny amounts of water can be appropriately mixed with the raw fuel gas.

The present embodiment also provides multiple mixing chambers in which horizontal movement in opposition to a rising air current is utilized to mix steam and raw fuel gas, so that mixing characteristics of the steam and raw fuel gas can be improved. In particular, in the second lower portion second mixing chamber 202, because the time over which gas is mixed in this horizontal movement process is relatively long, steam and raw fuel gas can be more effectively mixed.

Also, in the present embodiment, the communication holes 110a and 111a on the mixing plates 110 and 111 are formed in an elongated hole shape along the passage through which gas passes (see Fig. 8), therefore gas can be more reliably moved upward compared to a constitution in which the communication holes are small diameter circular holes. Also, using communication holes 110a, 111a with an elongated hole shape as in the present embodiment, the gas injection velocity from the communication holes 110a, 111a can be slowed, and the gas movement speed slowed, compared to communication holes constituted as small diameter circular holes. Therefore steam and raw fuel gas mixing characteristics can be more effectively assured. I.e. , the steam and raw fuel gas mixing time and mixing speed can be stabilized, and mixing characteristics made constant.

Also, in the present embodiment, the use of a dispersion plate 112 (see Fig. 9) in which multiple communication holes 112a are formed enables more highly mixed gas to be uniformly dispersed toward to the first mixing chamber 204. Hence the rising air current in the fuel gas supply flow path 20 can be utilized to mix the gas in an even more stable manner. In addition, uniformly dispersing gas toward the first mixing chamber 204 enables the dispersion characteristics of the gas injected into the reforming portion 94 on the downstream side of the first mixing chamber 204 to be made uniform.

Note that in the embodiment described above two lower portion second mixing chambers were used (first and second lower portion second mixing chambers 201, 202), but in other examples it is also acceptable to use only one lower portion second mixing chamber. In an example, the mixing plate 111 may be removed and only the room identified by reference numeral 201 used as the lower portion second mixing chamber. In that case, a room integrating the reference numeral 202 and 203 rooms into a single unit may be used as the lower portion second mixing chamber. Also, the dispersion plate 112 may be constituted so that the number of communication holes 112a increases with distance from the position corresponding to the mixing plate 110 communication hole 110a. In another example, the mixing plate 110 may be removed and a room integrating the reference numeral 201 and 202 rooms into a single unit may be used as the lower portion second mixing chamber.

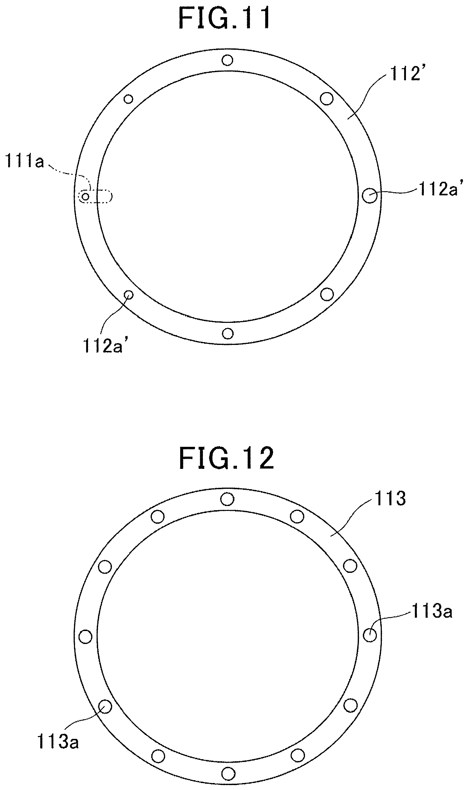

Note that in the embodiment described above we showed a dispersion plate 112 (see Fig. 9) on which the spacing between communication holes 112a narrows with distance from the position corresponding to the mixing plate 111 communication hole 111a. In another example, it is also possible to use a dispersion plate in which the diameter of the communication holes 112a increases with distance from the position corresponding to the mixing plate 111 communication hole 111a. Fig. 11 shows a plan view of a dispersion plate 112' according to this variant example. In Fig. 11, as in Fig. 9, the position on the dispersion plate 112' corresponding to the mixing plate 111 communication hole 111a is shown by a dotted line.

As shown in Fig. 11, multiple communication holes 112a' are formed at equal spacing in the dispersion plate 112'. The communication holes 112a' are formed in the dispersion plate 112' so that their diameter increases with distance from the position corresponding to the mixing plate 111 communication hole 111a. More specifically, for the purpose of equalizing the amount of gas injected from each of the communication holes 112a' in the dispersion plate 112, the communication hole 112a' diameter is designed according to the distance from a position corresponding to the mixing plate 111 communication hole 111a, making it easier to supply gas directed in the upward direction of the dispersion plate 112' by injection at positions far from the mixing plate 111 communication hole 111a than positions close to it (i.e., so that pressure losses in the communication holes 112a are decreased). The same mode of operation and effect as the dispersion plate 112 above can also be described by this type of dispersion plate 112'.

Next, referring to Fig. 12, we explain concretely the constitution and mode of operation of a dispersion plate 113 disposed at the top portion of the reforming portion 94. Fig. 12 shows a plan view of the dispersion plate 113. As shown in Fig. 12, the dispersion plate 113 is constituted in a circular ring shape, on which multiple communication holes 113a are provided at equal spacing.

In a constitution such as the present embodiment, in which a fuel gas supply flow path 20 is formed along the outer circumferential surface of the inside cylindrical member 64 forming the generating chamber 10 (see Fig. 2), an uneven temperature distribution in the generating chamber 10 tends to affect the mixed gas flowing through this fuel gas supply flow path 20. Specifically, the rising air current is strengthened in parts corresponding to locally high temperature regions of the generating chamber 10. As a result, in a constitution in which mixed gas is supplied to the reforming portion 94 using a rising air current, mixed gas is no longer uniformly supplied to the reforming catalyst 96 in the reforming portion 94, resulting in uneven reforming. To address this, in the present embodiment a dispersion plate 113, on which multiple communication holes 113a are formed as shown in Fig. 12, is disposed inside the fuel gas supply flow path 20, which is further upstream than the reforming portion 94 inlet. By so doing, variability in the amount of mixed gas supplied to the reforming catalyst 96 in the reforming portion 94 can be constrained by the dispersion plate 113; i. e. , the amount of mixed gas supplied to the reforming catalyst 96 can be made stable. Therefore by the present embodiment mixed gas can be uniformly supplied to the reforming catalyst 96 in the reforming portion 94, and a stable reforming reaction assured in the reforming portion 94. Also, because the dispersion plate 113 is a circular ring-shaped plate on which multiple communication holes 113a are formed, supply of mixed gas to the reforming portion 94 can be made uniform using a simple constitution.

Also, in the present embodiment the passage in the fuel gas supply flow path 20 is folded back from upward to downward, and the reforming portion 94 is disposed beneath that return part, while the dispersion plate 113 is placed inside the fuel gas supply flow path 20 between that return part and the reforming portion 94 (see Fig. 2). Thus compared to a constitution in which mixed gas raised by a rising air current is supplied directly to the reforming portion 94 without folding back the fuel gas supply flow path 20, the planar dispersion characteristics of the mixed gas can be corrected in the folded back part of the fuel gas supply flow path 20. In the present embodiment, the reforming portion 94 is thus supplied through the dispersion plate 113 with mixed gas whose planar dispersion characteristics has been improved in the folded-back part of the fuel gas supply flow path 20, so that the amount of mixed gas supplied to the reforming portion 94 can be effectively made more stable. Thus more stable reforming can be performed in the reforming portion 94.

Also, because in the present embodiment not only a dispersion plate 113 but also a dispersion plate 112 is placed inside the fuel gas supply flow path 20 on the upstream side of the dispersion plate 113 (see Fig. 2, Fig. 9), planar dispersion characteristics of the mixed gas can be effectively assured using a simple configuration even if there is an uneven temperature distribution in the generating chamber 10. In addition, because in the present embodiment such a dispersion plate 112 is placed on the upper portion of the space in which steam and raw fuel gas are mixed (specifically, the upper portion second mixing chamber 203), the amount of mixed gas injected from the dispersion plate 112 can be made uniform. Therefore the rising air current inside the fuel gas supply flow path 20 can be made uniform, and the amount of mixed gas supplied to the reforming portion 94 can effectively be made stable.

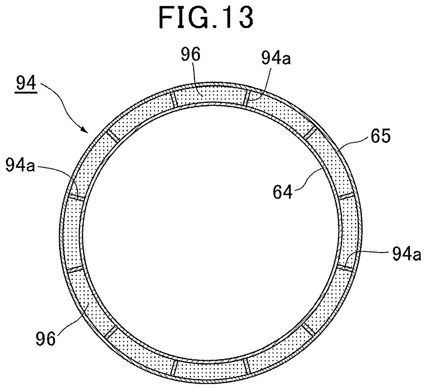

Next, referring to Fig. 13, we explain concretely the constitution and mode of operation of the reforming portion 94. Fig. 13 shows a cross section of the reforming portion 94, cut along the horizontal plane (also including the inside cylindrical member 64 and the intermediate cylindrical member 65) . As shown in Fig. 13, multiple partitioning members 94a disposed at equal spacing in the circumferential direction are formed in the reforming portion 94. Each partitioning member 94a extends from the inside perimeter of the intermediate cylindrical member 65 to the outside perimeter of the inside cylindrical member 64, and extends along the vertical direction of the reforming portion 94. In the reforming portion 94, reforming catalyst 96 is filled into each of the rooms partitioned by these multiple partitioning members 94a.

The number of partitioning members 94a placed in the reforming portion 94 (i.e. the number of rooms formed by partitioning the reforming portion 94 with the partitioning members 94a) and the number of communication holes 113a formed in the dispersion plate 113 are set so that gas is supplied from the same number of communication holes 113a in the dispersion plate 113 to the respective rooms containing reforming catalyst 96 partitioned by the partitioning members 94a. In the dispersion plate 113 and reforming portion 94 examples shown in Figs. 12 and 13, 12 communication holes 113a are formed in the dispersion plate 113, and 12 partitioning members 94a are erected in the reforming portion 94. In this example, a dispersion plate 113 is disposed relative to the reforming portion 94 so that gas is supplied from a single communication hole 113a on the dispersion plate 113 to the reforming catalyst 96 contained in the respective 12 rooms formed by the 12 partitioning members 94a.

Note that the number of communication holes 113a formed in the dispersion plate 113 and the number of partitioning members 94a placed in the reforming portion 94 are not limited to what is shown in Figs. 12 and 13. The number of the communication holes 113a formed in the dispersion plate 113 is preferably greater than the number of partitioning members 94a placed in the reforming portion 94, and gas is supplied from multiple communication holes 113a to a single room partitioned by the partitioning members 94a.

Thus, in the present embodiment, the amount of reforming catalyst 96 filled into the reforming portion 94 can be made uniform by placing multiple partitioning members 94a disposed at equal spacing in the circumferential direction in the reforming portion 94, and by filling reforming catalyst 96 into each of the partitioned rooms using the multiple partitioning members 94a. I.e., unevenness in the amount of reforming catalyst 96 filled into the reforming portion 94 can be constrained. Unevenness in the amount of filled reforming catalyst 96 tends to cause mixed gas to flow to locations with a low filling amount, which tends to produce uneven reforming in the reforming portion 94. However by achieving a uniform reforming catalyst 96 filling amount in the reforming portion 94, mixed gas can be supplied to the reforming catalyst 96 in equal portions. In particular, mixed gas is supplied through the dispersion plate 113 to the reforming portion 94, in which the reforming catalyst 96 filling amounts have thus been made uniform, enabling a stable reforming reaction to be effectively secured in the reforming portion 94. Therefore hydrogen can be stably produced in the reforming portion 94.

Note that in the embodiment described above the dispersion plate 113 was placed at the top end of the reforming portion 94, and more particularly the dispersion plate 113 was disposed so that the bottom surface of the dispersion plate 113 contacts the top end of the reforming portion 94 (see Fig. 2), but the dispersion plate 113 may also be disposed at a distance from the reforming portion 94. However it is preferable to dispose the dispersion plate 113 in the fuel gas supply flow path 20 between the folded-back part of the fuel gas supply flow path 20 and the reforming portion 94.

Also, in the above-described present embodiment only one dispersion plate 112 was placed in the fuel gas supply flow path 20 between the mixing plate 111 and the dispersion plate 113 (see Fig. 2), but it is also acceptable to additionally place one or more dispersion plates, in addition to the dispersion plate 112, between the mixing plate 111 and the dispersion plate 113.

Furthermore, in the embodiment above the solid oxide fuel cell apparatus 1 is constituted as a cylindrical module, including an evaporating portion 86, mixing plates 110, 111, and dispersion plates 112, 113 configured in a circular ring, but the solid oxide fuel cell apparatus 1 may also be constituted as an elliptical tubular module, and the evaporating portion 86, mixing plates 110, 111, dispersion plates 112, 113, and the like configured in an elliptical ring shape.

In the embodiment above the evaporating portion 86 and the mixing chambers 201-203 were formed using the inside cylindrical member 64, intermediate cylindrical member 65, and outside cylindrical member 66. I.e., the evaporating portion 86 and the mixing chambers 201-203 were erected in the space between the inside cylindrical member 64 and the outside cylindrical member 66, and in the space between the intermediate cylindrical member 65 and the outside cylindrical member 66. In another example, the evaporating portion 86 and the mixing chambers 201-203 may be formed using members other than the inside cylindrical member 64, intermediate cylindrical member 65, and outside cylindrical member 66. Specifically, the evaporating portion 86 and the mixing chambers 201-203 may be constituted as a package unit, being a separate unit from the main unit, which is constituted by the inside cylindrical member 64, intermediate cylindrical member 65, and outside cylindrical member 66, and the package unit may be linked to the main unit.

### DESCRIPTION OF REFERENCE NUMBERS

1: solid oxide fuel cell apparatus
2: fuel cell module
10: generating chamber
20: fuel gas supply flow path (fuel gas supply passage)
22: oxidant gas supply flow path (oxidant gas supply passage)
61: sheath heater
64: inside cylindrical member
65: intermediate cylindrical member
66: outside cylindrical member (housing case)
86: evaporator
86a: sloped plate (capillary-action producing portion)
88: water supply pipe (water supply portion)
90: fuel gas supply pipe
94: reforming portion (reformer)
94a: partitioning member
96: reforming catalyst
110: mixing plate
110a: communication hole
111: mixing plate
111a: communication hole
112: dispersion plate
112a: communication hole
113: dispersion plate
113a: communication hole
201: first lower portion second mixing chamber
202: second lower portion second mixing chamber
203: upper portion second mixing chamber
204: first mixing chamber

## Claims

1. A solid oxide fuel cell apparatus for generating electricity by supplying and reacting fuel gas and oxidant gas, comprising:
multiple fuel cells mutually electrically connected to each other;
a housing case for housing the multiple fuel cells;
an oxidant gas supply passage for supplying the oxidant gas to the multiple fuel cells;
a fuel gas supply passage for supplying the fuel gas to the multiple fuel cells;
a reformer disposed inside the fuel gas supply passage, for reforming raw fuel gas using steam to produce the fuel gas;
an evaporator for producing steam supplied to the reformer; and
a water supply portion for supplying water to be evaporated by the evaporator;
wherein the evaporator includes a capillary-action producing portion for dispersing water supplied from the water supply portion over the entire evaporator using capillary action.

2. The solid oxide fuel cell apparatus according to claim 1, wherein the capillary-action producing portion of the evaporator is formed by an acute-angle shaped indentation disposed over the entire bottom surface of the evaporator.

3. The solid oxide fuel cell apparatus according to claim 2, further comprising a mixing chamber positioned above the evaporator, for mixing steam and raw fuel gas supplied from below;
wherein the evaporator supplies steam and raw fuel gas to the mixing chamber from a position opposed to a position at which water and raw fuel gas are supplied, across a center axis of the evaporator.

4. The solid oxide fuel cell apparatus according to claim 3,
wherein the evaporator includes a sloped plate, one end of which is affixed to a vertically extending inside wall of the housing case, and which slopes upward from the said end toward the other end, and
wherein, in the capillary-action producing portion, the acute-angle shaped indentation is configured by a gap formed by the sloped plate and the inside wall of the housing case.

5. The solid oxide fuel cell apparatus according to claim 4,
wherein the housing case is configured to form a circular or elliptical ring-shaped interior space; and
wherein the sloped plate is formed in a circular or elliptical ring shape, and is disposed over the entire inside circumferential surface of the interior space.

6. The solid oxide fuel cell apparatus according to claim 4, further comprising a circular or elliptical ring-shaped heater disposed on the outer circumferential surface of the housing case, and on the entire perimeter of the position corresponding to the evaporator.

7. The solid oxide fuel cell apparatus according to claim 6, wherein the heater is disposed above the capillary-action producing portion.
